# EUROPEAN PATENT SPECIFICATION

(11) **EP 1 624 743 B1**
(45) Date of publication and mention of the grant of the patent: **14.03.2007**
(21) Application number: 04729439.2
(22) Date of filing: 26.04.2004
(51) Int. Cl.: A01C 11/02

(54) **A METHOD AND APPARATUS FOR TRANSPORTING SEEDLINGS IN A PLANTING MACHINE**
VERFAHREN UND VORRICHTUNG ZUR ABLIEFERUNG VON SÄMLINGEN AUF DEM BODEN IN EINER PFLANZMASCHINE
PROCEDE ET DISPOSITIF POUR LA DELIVRANCE DE PLANTES JEUNES SUR LE SOL DANS UNE PLANTEUSE

(30) Priority: 01.05.2003 EP 03076263; 01.05.2003 EP 03076264
(43) Date of publication of application: 15.02.2006
(73) Proprietor: N.V. Agriplant S.A., 8890 Dadizele (BE)
(72) Inventor: PARREIN, Bart, B-8920 Langemark (BE); BINTEIN, Frans, B-8940 Geluwe (BE)
(74) Representative: Ryckeboer, Leo L.H.
(86) International application number: PCT/EP2004/004504
(87) International publication number: WO 2004/095906

(56) References cited:
- EP-A- 0 390 289
- EP-A- 0 789 988
- GB-A- 2 228 910
- US-A- 4 593 632
- US-A- 5 911 631

## Description

### Technical field

The invention relates to a method and apparatus for transporting seedlings in a planting machine, in particular for regular delivery of seedlings in a planting vehicle to the soil.

### Background art

For such methods the seedlings to be planted are generally stocked in trays. The planting machine comprises generally means for transfering the seedlings, eg. row per row, from the trays and for conveying the seedlings, optionally through a selector device, to the planting station. In such selector device the improper seedlings are removed. The selected seedlings are further suitably transported to a downwardly directed conveyor that feeds them to said planting station for the intended regular delivery to the soil. With a regular delivery is meant the delivery to the soil of consecutive seedlings at a predetermined substantially identical distance from one another at any driving speed of the planting vehicle over the soil.

The method and apparatus needs also measures and means for first transporting and positioning the seedling carrying trays in the planting vehicle in view of a proper transfer of the seedlings to the selector device and further to the planting station. In particular means and measures have to be provided for exchanging trays, i.a. for evacuating empty trays from the apparatus.

The European patent application 390 289 relates to an apparatus for relocating cutlings in plant boxes in which an endless transport ation element with grippers is used. Seedling transportation apparatuses for a transplantation machine are also known from EP 806131, EP 898866 and EP 900516. In the planting vehicles according to EP 806131 and EP 900516 a horizontal path is provided for transporting the seedling carrying trays under a seedling pick-up and transfer device that removes the seedlings from the trays row per row. The emptied trays are advanced mechanically further at the same level below a transversally oriented horizontal conveyor belt on which the removed seedlings are deposited by the pick-up and transfer device.

According to EP 898866 this transverse conveyor belt is equiped with a very specific selector device for removing improper seedlings. This belt with the coupled selector device delivers the proper seedlings further via a downwardly directed conveyor to the planting station.
The selector device delivers at its exit the proper seedlings to the inlet of the downwardly directed conveyor. At that spot a sensor detects the packing condition of the proper seedlings passing by and roughly steers the speed of the transverse conveyor as a response to this packing condition. This arrangement however has the drawback that no reliable operational link is provided between the actual planting speed in the field and the feeding speed of proper seedlings at the outlet end of the selector device. As a consequence a regular delivery of seedlings to the planting station at a predetermined substantially constant planting distance is not assured. The very specific selector device has also a quite complicated construction.

Further, these machines of the prior art, especially according to EP 806131 and EP 900516 have the disadvantage that they enable only a relatively complex pick-up process. Indeed, the correct positioning row per row of each new tray carrying seedlings under the seedling transfer device requires a quite cumbersome positioning cycle especially between removal of the last row of seedlings from the previous tray and the first row from the subsequent new tray. The positioning speed suffers therefrom.

### Description of the invention

It is now an object of the invention to provide a planting method and machine of the type described above that enables a faster planting operation, i.e. with a faster vehicle speed (m/min).

It is also an object of the invention to provide a planting method and machine that allows a more accurate planting operation whereby the consecutive seedlings are planted in the soil at a predetermined and also identical or nearly identical distance from one another, irrespective of the driving speed of the planting vehicle or at least largely independent of said speed. The latter objective is particularly important in cases where a constant output per time unit is desired for mechanically harvesting later on the grown plants, eventually with human intervention as required eg. for sprouts.

It is a further object of the invention to allow such faster and/or more accurate planting operation with a simpler planting machine than those known from the prior art. In particular the means for the exchange of trays and the new selector device require a simpler construction to allow such faster operation.

To meet the objectives of the invention, a seedling transportation apparatus with the features of claim 1 is proposed.

According to the invention the means for guiding and removing an empty tray include guiding rails for temporarily supporting the opposite side edges of said empty tray. Said rails are pivotably mounted in the neighbourhood of their outer edge to enable said tray to be removed on a support and to actuate, preferably at the same time, abutment means for the front side of the adjacent new tray. The empty tray is preferably removed at a level that is lower than the path of advancement of a new tray, eg. at a level under said horizontal conveyor.

Said guiding rails are preferably pivotably mounted along their outer edge to enable said empty tray to drop down on a support for further removal at a lower level, optionally at a level under said first conveyor. If desired, said removal can even be carried out at a lowermost level underneath said first conveyor itself in a direction that is substantially parallel to the advancement direction of a new tray.

However the level of the support can also be somewhat higher than said lowermost level. After the guiding rails have then released and deposited the empty tray on the support, eg. at such higher level, it can be removed in a direction perpendicular to the direction of advancement of a new tray. The empty tray is thus removed sideways, eg. running along a path adjacent to that of the first conveyor and eg. in the same direction as the seedlings deposited on the first conveyor.

The abutment means are preferably stops that are transversely mounted at the inlet end of said guide rails. The path for advancing a new tray is preferably along a feeding conveyor that is slightly inclined downwardly from a higher inlet end to a lower outlet end.

Said path is preferably at an average level equal to or higher than the level of the first horizontal conveyor. The support for removal of an empty tray under the first horizontal conveyor comprises preferably discharging means with most preferably an inclination from a higher inlet end to a lower outlet end. The apparatus can also be equiped with suitable recirculating means for bringing back the empty tray close to the feeding area for a new tray.

According to an interesting aspect of the invention the row of picking means in the seedling transfer device cooperates with a row of up and down movable pushing pins in the apparatus, i.a. for suitably lifting the seedlings row per row from the trays. At least one and preferably all of said pushing pins act thereby as a positioning pin for each consecutive row of seedlings to be lifted from the tray.

In fact, according to the invention there is a very advantageous functional link between the operation of said abutment means for the positioning of the front side of a new tray in view of the insertion of the row of picking means in the first row of cells and the subsequent insertion of the row of pushing pins in said first row. This fast, simple and correct positioning for the first row is also a good start for the further positioning of said tray by said row of pushing pins in each consecutive row in view of the suitable lifting of the seedlings from any subsequent row.
The invention comprises also transfer means for depositing the seedlings, that are removed row per row from the trays, in a series on a first horizontal conveyor. This first conveyor may cooperate with a second conveyor so that the loaf portion of the seedlings is gripped between said first and second conveyor. A selector device is provided for removing improper seedlings from the apparatus during advancement of said first conveyor towards a third downwardly directed conveyor that receives and advances the remaining proper seedlings towards the soil area for the planting operation in the field. With improper seedlings is meant seedlings having only a rootball portion and no, or a too short loaf portion.

According to another advantageous aspect of the invention separate buffer means can be arranged between the outlet of said first and the inlet of said third conveyor for carrying said proper seedlings to said inlet. Means are also provided for driving said buffer means at a speed that is linked to the speed of the third conveyor. Said buffer means comprise preferably a further fourth conveyor. The speed of the fourth conveyor is linked by its driving means in the appropriate manner to the speed of the third conveyor in view of producing the predetermined planting distance in the soil. This fourth conveyor most preferably cooperates with a transportation belt and both together constitute a preferred embodiment of the buffer means. The root ball portion of the proper seedlings are then gripped or held and advanced between said fourth conveyor and the cooperating transportation belt.

Actually, such separate buffer means assure a flexibly adjustable and accurate transfer the seedlings through the third conveyor to plant them in the soil at the predetermined substantially identical distance.

Another interesting feature of the invention relates to the preferred selector device with a specific simple construction. This selector device is preferably coupled to said first conveyor. This device comprises an inclined selector belt, mounted adjacent to the exit end of, and driven by the exit roller of the first conveyor. This inclined selector belt faces with its inlet roller the outlet roller of the rootball-carrying portion of said first conveyor and has an upwardly directed inclination from its inlet roller towards said exit roller.

These and many other features of the invention and its operation will be explained hereinafter with their advantages and with reference to the accompanying drawings. It is clear that the invention is not limited to the exemplary embodiments decribed below.

### Brief description of the drawings

Figure 1 is a perspective view of some essential parts of the planting vehicle according to the invention.
Figure 2 is a side elevation view of figure 1.
Figure 3 is another perspective view showing some details of the buffer means.
Figure 4 is a front elevation view of the first to fourth conveyor and buffer means.
Figure 5 is a perspective view of a stage in the tray positioning cycle according to the invention.
Figure 6 is a similar view of a newly positioned tray just before the picking up cycle of the first row of seedlings from that tray.
Figure 7 is a side elevation of the mechanism that steers the positioning cycle of the tray row per row.

### Detailed description

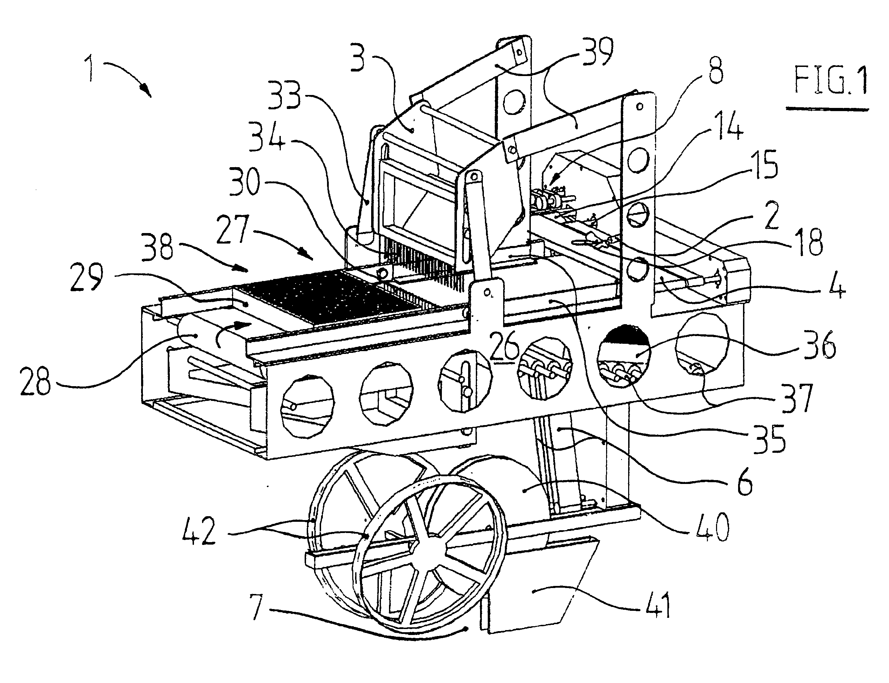

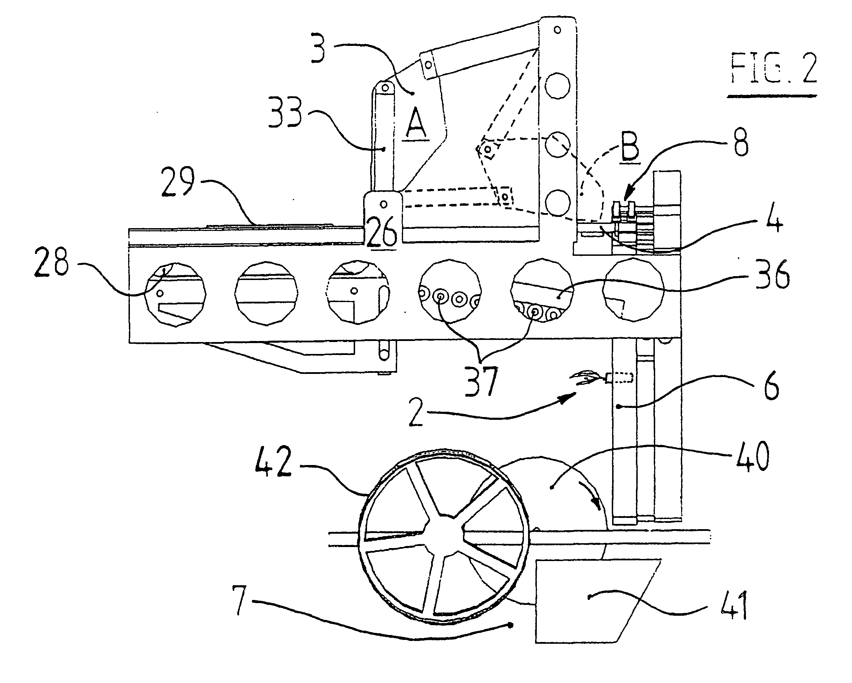

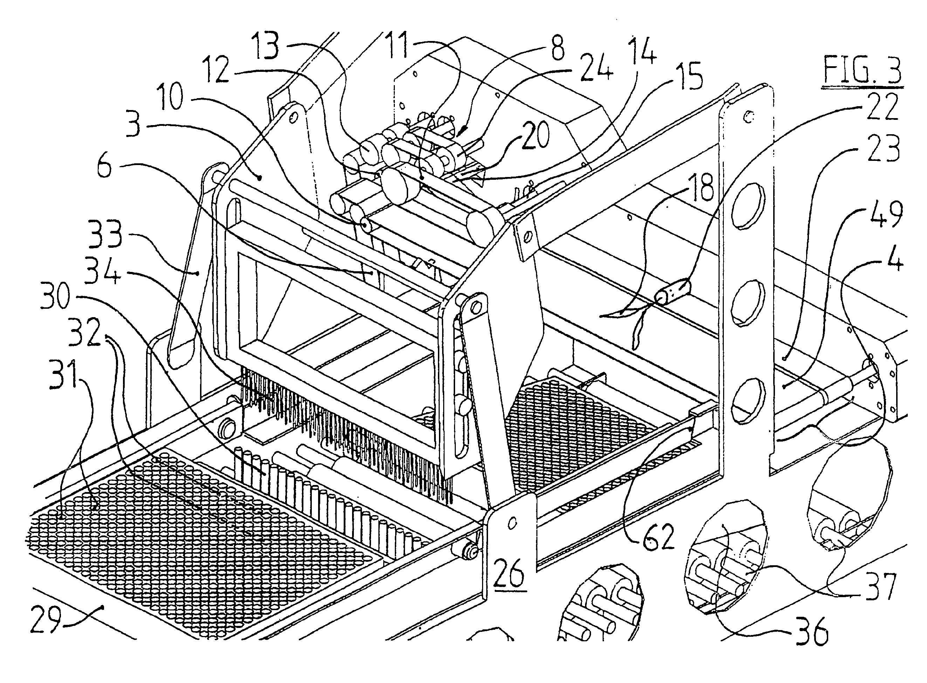

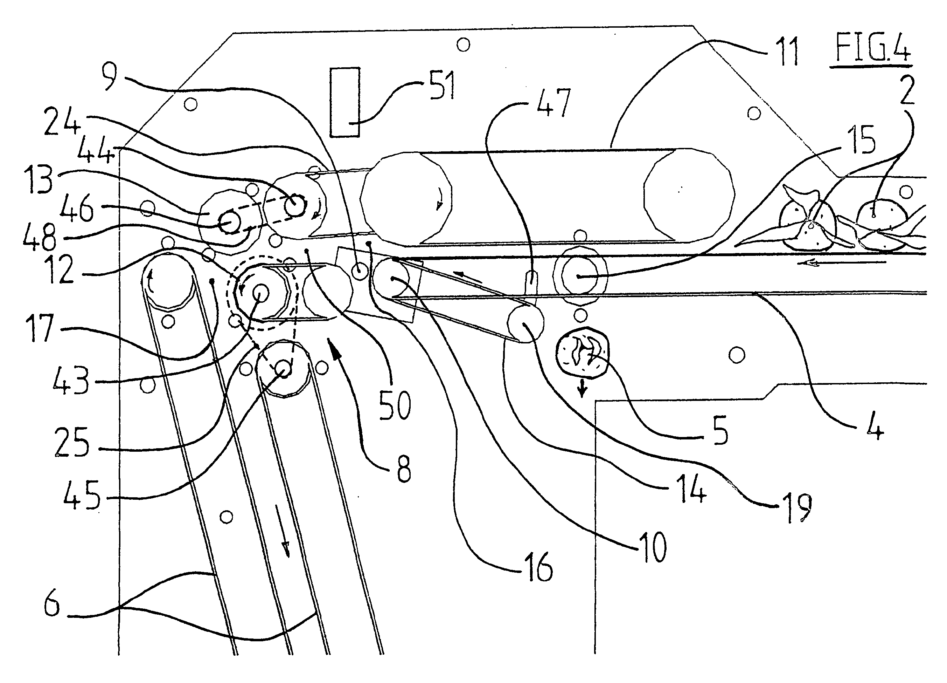

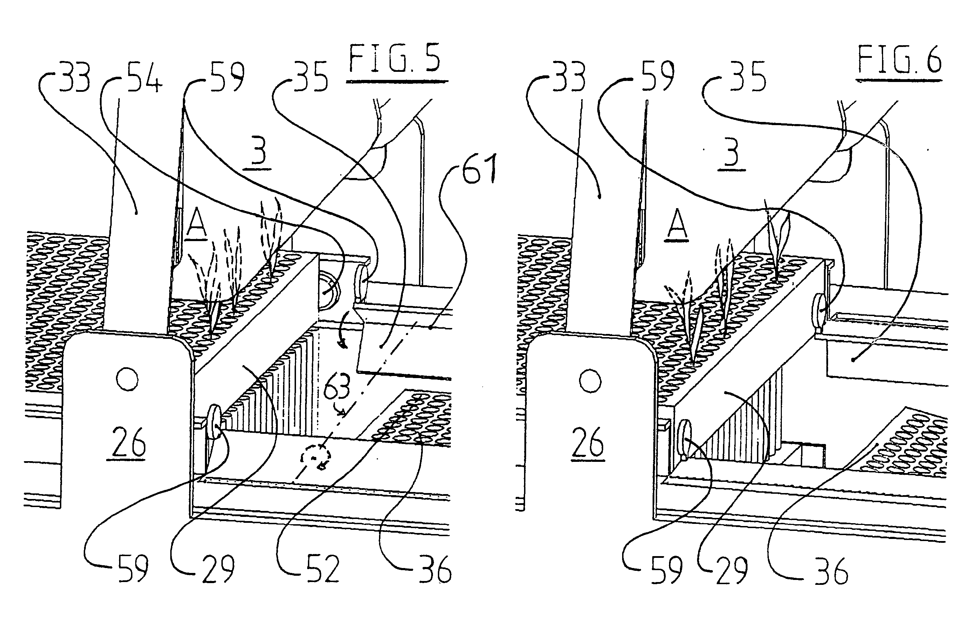

The general construction and operation of the whole process and apparatus will first be described in a brief overview with reference to figures 1 to 3. Details of the important new and inventive parts such as the tray positioning cycle (figures 5, 6 and 7) and the buffer means and process (illustrated in figures 3 and 4) will then follow. The seedling transportation apparatus 1 illustrated in figure 1, 2 and 3 is of course to be mounted on or connected to the chassis of a vehicle, e.g. a tractor (not shown). The apparatus 1 comprises a tray transporting section 27 mounted in a frame 26. Advancing means, such as or comprising a feeding conveyor 28 are provided at the feeding area 38 of said section 27 to bring the new trays 29 into the apparatus. The path for advancing a new tray along the feeding conveyor 28 is preferably slightly inclined downwardly from a higher inlet end to a lower outlet end. Said path is preferably at an average level equal to or higher than the level of the first transverse horizontal conveyor 4 at the other end of the apparatus 1. Likewise, the support for removal of an empty tray 36 under the first horizontal conveyor 4 in this embodiment comprises preferably discharging conveying means 37 with an inclination from a higher inlet end to a lower outlet end. The conveying means 37 shown in figures 1 and 2 comprise a set of parallel rollers with their axes perpendicular to the advancement direction of the new trays 29. However a conveyor belt or any other suitable conveyor can be used i.s.o. this set of rollers.

In an embodiment (not shown) where the empty tray is to be removed sideways as explained above, the axis of rotation of discharging conveyor rollers of a support means is then of course parallel to the direction of advancement of the new tray (in stead of perpendicular as for the embodiment shown in figure 2).

Downstream of the feeding conveyor 28 a row of up and down movable pushing pins 30 is arranged i.a. for lifting the seedlings 2 per row 32 from their cells 31 in the new trays. Above said row of pushing pins 30 a seedling transfer device 3 is pivotally mounted on arms 33 and 39. Said arms 33 and 39 are themselves pivotally supported in the frame 26. Due to said simple pivotable arrangement, and as shown in figure 2, the seedling transfer device 3 can move from a picking-up position A of the seedlings 2 to a deposition position B of said picked seedlings on a first transverse horizontal conveyor 4 mounted in the apparatus. The fact that the tray 29 is about at the level of the conveyor 4 is of great advantage. Indeed, it enables to design a relatively short and easy transfer path and thus a simple and fast transfer process of the seedlings from an upright position in the tray 29 to a horizontal lay down position on the conveyor 4.

The transfer device 3 carries a row of picking means 34 such as needles mounted here for up and down movement in said device between a retracted position (up) and an extended position (down). Figure 1 and 3 show the seedling transfer device 3 in its picking position whereby the needle points face the cells 31 and the upper ends of the pushing pins 30.

Further downstream of said pushing pins, guiding rails 35 are mounted in the opposite side edges in the frame 26 for temporarily supporting the opposite side edges of an empty tray 36 and for guiding and removing said empty tray. Said L-shaped guiding rails 35 are pivotally mounted at their ends to enable to drop said tray 36 on a support 37 for further removal under the transverse conveyor 4. This removal or discharge operation for an empty tray will be described in more detail further on with reference to figures 5 and 6.

The transverse horizontal conveyor 4 transports the deposited seedlings 2 towards the inlet end 17 of the third downwardly directed conveyor 6. Details of the construction and operation of this transportation with the use of a preferred selector device 14 and separate buffer means 8 will be described further on with reference to figure 4.
At the lower exit end of the third conveyor 6 near to the soil area 7, the selected plants are gripped with their loaf portion 18 in the planting wheel 40. This wheel brings the seedlings 2 from their horizontal position in the conveyor 6 to their vertical planting position in the soil area 7. This soil area is in the shape of a furrow formed by the plough 41. The wheels 42 fill up the furrow around the planted seedlings to complete the planting operation concurrent with the advancement of the tractor with the apparatus 1 in the field.

Details of the positioning means and process for the consecutive trays will first be explained with reference to figures 5, 6 and 7. When the seedlings are removed row per row from a tray and transferred to the conveyor 4, except after picking up the last row, this almost empty tray is supported on the rails 35. For removal of this last row of seedlings the row of pushing pins 30 is first brought into a position where it faces the bottom of the cells of this last row. How this occurs will be described below when explaining the positioning cycle of the tray row per row.

Secondly, the row of needles 34, facing the topside of the cells of this last row is moved down and inserted into the cells to pick up the seedlings therefrom. After that, the row of pushing pins 30 is lifted by a piston 53 to push the rootballs 22 of the seedlings out of their cells. The piston 53 is fixed in the frame of a horizontally movable carrier 55 for the pushing pins. The needles 34 lift at the same time with the result that the seedlings stay picked up on their needles. During this removal process of the seedlings the tray is of course fixed in its position by the transverse blocking stops 54 as will be explained hereinafter. The seedlings 2 are thereby ready for transfer to the conveyor 4 by means of simply pivoting the transfer means 3 with its arms 33, 39 from position A to B (see figure 2).

At the same time the feeding conveyor 28 and the pushing pins 30, that are located in the last row 52, advance the tray by a step forward that is equal to the distance "d" between two consecutive rows. This movement is part of the positioning cycle of the tray and is carried out and monitored by the movable carrier 55 of the pushing pins. This carrier is supported by pivoting arms 56 in the frame 26 of the apparatus. The conveyor 28 is preferably slightly inclined from a higher inlet end to a lower outlet end.

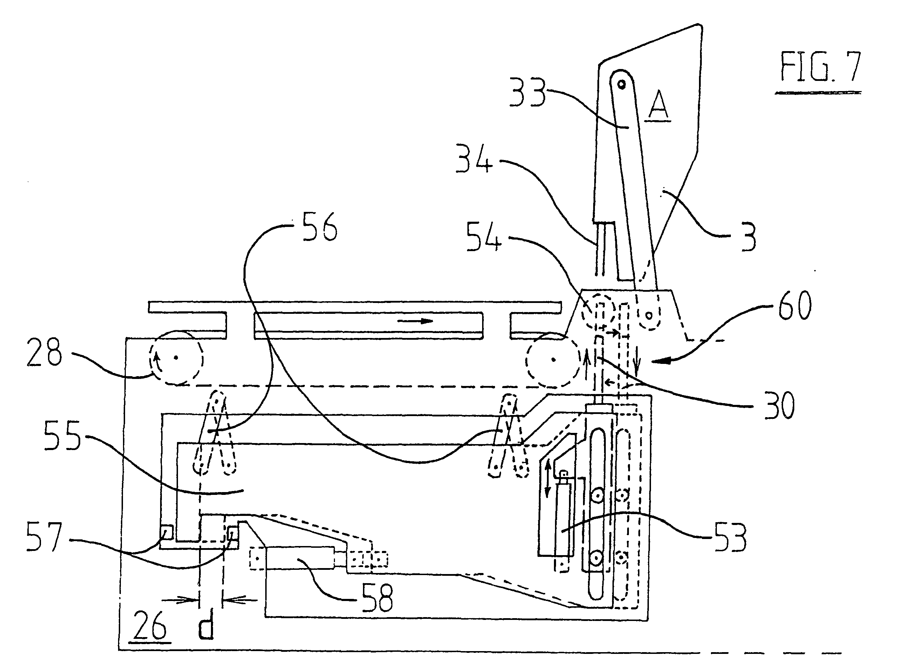

The whole positioning cycle is controlled by a software programme that links and steers the movement of the carrier 55 and pushing pins 30 in consecutive positioning steps. The advancement distance "d" of a step forward is preset by the distance stops 57 in the frame 26. This preset distance d is of course adjustable according to the type of tray in use. The horizontal movement back and forth of the carrier 55 for the step "d" is performed eg. by a piston 58 fixed in the frame 26. The most forward position of the carrier and pushing pins is shown in dotted lines in figure 7.

Once the tray with its now emptied last row 52 is pushed forward by a step "d" the pushing pins are lowered from this row to the level below the bottom of the tray and moved horizontally backwards by the carrier 55 to their position right under the pick-up needles. At this time a detector gives a signal that there is no more tray in the pick-up area and thereby actuates the guiding rails 35 to pivot down along their outer edge 61. As a result thereof, the empty tray 36 drops down on the support 37 that is preferably inclined in downward direction. This stage in the removal process of an empty tray is illustrated as an example in the embodiment of figure 5.

Concurrent with the pivoting of the rails 35 abutment means 59 for the front side of the new tray 29 are actuated. Figure 6 shows this further stage where the previous empty tray is removed. The new tray 29 is meanwhile advanced with its front side against these abutment means 59 by the feeding conveyor 28.

Now that the new tray 29 is in its position to pick up the first row of seedlings from it, transverse blocking stops 54 in the side walls of the frame 26 are actuated from a retracted position to an extended position where they clamp said tray transversally by its sidewalls in a fixed position. The needles 34 are again lowered to pick up the first row from tray 29 and the pushing pins underneath this first row of cells are again lifted to remove this row together with the needles 34.

The tray positioning and seedling removing cycle for the second and any further row repeats itself in the same manner. The blocking stops 54 are first again retracted to set the tray free for moving a step d forward. The pushing pins 30 move the tray forward over the step d. The blocking stops 54 are again extended to clamp the tray and thereby fix its position for removal of a new row and the pushing pins 30 are lowered. Subsequently, by retraction of the piston 58 the carrier 55 moves the pushing pins back where they are ready to start a new pick-up cycle for the next row. This movement cycle for the pins 30 is indicated by the four arrows 60 in figure 7.

With reference now to figure 4, the first horizontal conveyor 4 cooperates with a second conveyor 11 so that the loaf portion 18 of the seedlings is gripped between said first and said optional second conveyor. The specific selector device 14,15 is coupled to said first conveyor for removing improper seedlings 5 therefrom and from said coupled selector device during advancement thereof towards the third downwardly directed conveyor 6. This third conveyor 6 thus receives and advances only the remaining proper seedlings to the soil area 7 for the planting operation in the field. The separate buffer means are arranged between the outlet 16 of said first and the inlet 17 of said third conveyor for carrying said proper seedlings to said inlet 17.

The means 25 for driving said buffer means 8, at a speed that is linked to the speed of the third conveyor 6, comprise a number of chain or gear transmissions coupled to the respective shafts 43, 44, 45, 46 of the fourth conveyor 12, the cooperating transportation belt 24, the third conveyor 6 and the exit roller 13. This is schematically shown in figure 4. The chain 25 runs eg. over two gears with different diameter. These diameters will be chosen according to the desired speed proportion between the fourth conveyor 12 and the third conveyor 6 in view of setting a predetermined distance between consecutive seedlings moving down to the planting station between the two belts of said third conveyor 6. A parallel gear (not shown) can be arranged on shaft 43 that grips into a gear on shaft 46 to rotate the exit roller 13 in opposite direction but at about the same speed. In addition a suitable chain transmission 48 via another parallel gear on shaft 46 can drive the transportation belt 24 so that in fact the belts 12, 24 and the roller 13 all rotate at about the same linear speed at their circumference. It will be clear to a person skilled in mechanics that similar transmissions can be designed to reach the same effect.

The exit roller 13 facing the inlet 17 of the third conveyor 6 has preferably a relatively soft and elastically compressible surface such as a foam rubber layer to suitably accomodate i.a. irregularities in the surface of the rootball portions 22.

Just upstream of the fourth conveyor 12 and close to the exit roller 20 of the selector device, a roller 9 may be arranged that runs parallel to both and with a circumferential speed preferably equal to that of the fourth conveyor 12. This roller 9 has preferably a small diameter and forms a bridge that facilitates the advancement of the rootballs of the proper seedlings delivered by the selector belt 14 to the buffer means.

The inclined selector belt 14 is mounted adjacent to the exit end of the first conveyor 4. This belt is driven by its outlet roller 20 that is mounted on the same shaft as the exit roller 10 of the loaf carrying portion of the first conveyor 4 and thus runs at the same speed as the first conveyor. The inclined belt 14 faces with its inlet roller 19 the outlet roller 15 of the rootball-carrying portion 23 of said first conveyor 4. The inclination is upwardly directed from its inlet roller 19 towards its outlet roller 20. The degree of inclination can be set by fixing the level of the inlet roller 19 in a slit 47 of the supporting member for that roller.

The selection and subsequent buffer process operates as follows. Seedlings 2 on the first conveyor 4 have their rootballs 22 resting on the portion 23 of the first conveyor. Their loaf portion 18 rests on the longer parallel portion 49 and is gripped between said portion 49 and the second conveyor 11. These good seedlings continue further their movement into the buffer means 8. During this movement their rootball portion 22 falls at the end of the belt 23 onto the lower inlet end 19 of the inclined belt 14 and climbs again up on this belt to the inlet end of the buffer means 8 in the nip between the cooperating transportation belt 24 and the roller 9. A number of consecutive good seedlings is more or less closely packed one after the other in this broad and spacy buffer area 50. A contactless (eg. infrared) detector 51 checks the packing condition in this area. If the packing is not close enough, a signal is given by the detector to the driving motor (not shown) of the first conveyor to accelerate its speed to restore a close packing. The closely packed good seedlings 2 are automatically advanced and delivered at the appropriate speed to the inlet 17 of the third conveyor 6 to meet the preset planting distance in the soil.

Improper seedlings on the first conveyor do not have a loaf portion that can be gripped between the first (4) and second conveyor 11. The rootball 22 of said improper seedlings thus falls down from the conveyor portion 23 on the inclined selector belt 14 when it reaches its exit roller 15. Since there is no gripped loaf portion to hold it and to drag it upwards on the selector belt 14, the rootball falls further down as an improper seedling 5.

Having described the invention with reference to an exemplary embodiment, it is clear that different mechanical constructions can be used with an equivalent function. It is possible eg. , as indicated in figures 3 and 5, to arrange the rails 35 (accompanied by suitable abutment means) with their leading end 62 pivotable downwards and again upwards around a horizontal axis 63 parallel to the front side of the adjacent new tray 29.

The transplanting apparatus can of course be equiped with its own traction motor to constitute an independent selfmoving machine. It can be designed to feed one, two or more furrows at a time.

## Claims

1. A seedling transportation apparatus (1) for a transplanting machine to be mounted on a planting vehicle, including a seedling tray transportation section that comprises means (35) for guiding and removing an empty tray (36) from the apparatus, means (28) for feeding and advancing an adjacent new tray (29) carrying the seedlings (2) along a path into the apparatus and means (30) for positioning said new tray in view of the picking-up of said seedlings per row (32) from said new tray by a row of picking means (34) mounted in a seedling transfer device (3) for depositing the seedlings onto a first horizontal conveyor (4) in the apparatus (1) **characterised in that** the means for guiding and removing an empty tray (36) include guiding rails (35) for temporarily supporting the opposite side edges of said empty tray, which rails are pivotably mounted in the neighbourhood of their outer edge to enable said tray (36) to be removed on a support (37) and to actuate abutment means (59) for the front side of the adjacent new tray (29).

2. An apparatus according to claim 1 wherein the guiding rails (35) are pivotably mounted along their outer edge (61) to enable said empty tray (36) to drop down on a support (37) for further removal at a lower level, optionally at a level under said first conveyor (4).

3. Apparatus according to claim 2 wherein the empty tray (36) is further removable on the support (37) underneath the first conveyor (4) in a direction that is substantially parallel to that for advancing a new tray.

4. Apparatus according to claim 2 wherein the empty tray (36) is further removable on the support (37) in a direction perpendicular to the direction of advancement of a new tray.

5. An apparatus according to claim 1 wherein said abutment means (59) are stops transversely mounted at the inlet end of said guiding rails (35).

6. Apparatus according to claim 1 wherein the path for advancing a new tray is along a feeding conveyor (28) that is slightly inclined downwardly from a higher inlet end to a lower outlet end.

7. Apparatus according to claim 1 wherein the path for advancing a new tray is at an average level equal to or higher than the level of the first horizontal conveyor (4).

8. Apparatus according to claim 1 wherein the support for removal of an empty tray comprises discharging conveying means (37) with an inclination from a higher inlet end to a lower outlet end.

9. Apparatus according to claim 1 comprising recirculating means for bringing back the empty tray close to the feeding area (38) for a new tray.

10. An apparatus according to claim 1 wherein a row of up and down movable pushing pins (30) is provided for lifting the seedlings row per row from the trays, and means for steering their cooperation with said row of picking means (34) wherein at least one of said pushing pins acts as a positioning pin for each consecutive row of seedlings to be lifted from the tray.

11. Apparatus according to claim 10 wherein said pushing pins (30) are mounted in a horizontally movable carrier (55) that is supported in the frame (26) of the apparatus, the horizontal movement being actuated by a piston (58) fixed in the frame (26) and being controlled to a distance or step "d" by distance stops (57) in said frame whereas the up and down movement of the pushing pins (30) is actuated by a piston (53) mounted in said carrier (55).

12. Apparatus according to claim 10 or 11 wherein transverse blocking stops (54) are mounted in the side walls of the frame (26) and controllably movable from a retracted position to an extended position wherein they clamp the tray (29) in a fixed position for removal of the seedlings row per row.

13. An apparatus according to claim 1 comprising further near the outlet of said first horizontal conveyor (4), a selector device (14) for removing improper seedlings (5) before or during advancement thereof towards a third downwardly directed conveyor (6) for receiving and advancing the remaining proper seedlings towards the soil area (7) for the planting operation in the field and wherein separate buffer means (8) are provided between the outlet (16) of said first, and the inlet (17) of said third conveyor for carrying said proper seedlings to said inlet (17) and means for driving said buffer means (8) at a speed that is linked to the speed of the third conveyor (6).

14. Apparatus according to claim 13 wherein said first conveyor (4) cooperates with a second conveyor (11) so that the loaf portion (18) of the seedlings is gripped between said first and second conveyor.

15. Apparatus according to claim 13 wherein said buffer means (8) comprises a further fourth conveyor (12), the speed of which is linked by its driving means in the appropriate proportion to the speed of the third conveyor (6) in view of producing the predetermined planting distance in the soil.

16. Apparatus according to claim 15 wherein said buffer means (8) includes a transportation belt (24) cooperating with the fourth conveyor (12) and between which the root ball portion (22) of the proper seedlings are held and advanced.

17. Apparatus according to claim 15 or 16 wherein a roller (9) is arranged close to and running parallel to the exit roller (10) of the conveyor (4).

18. Apparatus according to claim 15 or 16 comprising further an exit roller (13) facing the inlet end of the third conveyor (6) and the speed of which is linked to that of the fourth conveyor (12).

19. Apparatus according to claim 18 wherein said exit roller (13) has an elastically compressible surface.

20. Apparatus according to claim 13 wherein said selector device (14) is coupled to said first conveyor (4).

21. Apparatus according to claim 20 wherein the selector device comprises an inclined selector belt (14) mounted adjacent to the exit end of the conveyor (4) and driven by its outlet roller (20), facing with its inlet roller (19) the outlet roller (15) of the rootball carrying portion (23) of said first conveyor (4) and having an upwardly directed inclination from its inlet roller (19) towards said exit roller (20).

## Patentansprüche

1. Eine Transportvorrichtung (1) für Setzlinge für ein Umpflanzungsgerät das auf einer Pflanzmaschine zu montieren ist, welche Vorrichtung einen Transportabschnitt für Setzkasten aufweist , der Mittel (35), zur Führung und Erweiterung eines leeren Setzkastens (36) aus der Vorrichtung aufweist, Mittel (28) zum Zu- und Fortführen eines neuen, der die Setzlinge (2) tragenden Setzkastens (29), entlang eine Strecke in der Vorrichtung und Mittel (30) zum Positionieren des genannten neuen Setzkastens zwecks Ausnahme der Setzlinge pro Reihe (32) aus dem neuen Setzkasten durch eine Reihe von, in einem Transferapparat (3) montierten Aufsteckmitteln (34) für Abgabe der Setzlinge auf eine erste horizontale Transportbahn (4) in der Vorrichtung (1) **dadurch gekennzeichnet dass** die Mittel zur Führung und Erweiterung eines leeren Setzkastens Führungsschiene (35) für zeitliche Unterstützung der gegenüberliegenden Ränder des leeren Setzkastens aufweisen, welche Schiene scharnierend in der Nähe ihrer Aussenränder montiert sind zwecks Erweiterung des genannten Setzkastens (36) auf eine Unterstützung (37) und zwecks Betätigung von Anschlagmitteln (59) für die Vorderseite des nebenliegenden neuen Setzkastens (29).

2. Eine Vorrichtung gemäss Anspruch 1, wobei die Führungsschiene (35) scharnierend entlang ihre Aussenränder (61) montiert sind um den genannten leeren Setzkasten (36) fallen zu lassen auf einer Unterstützung (37) zur weiteren Erweiterung, gegebenenfalls auf einer Ebene unterhalb der genannten ersten Transportbahn (4).

3. Vorrichtung gemäss Anspruch 2, wobei der leere Setzkasten weiter auf der Unterstützung (37) unterhalb von der ersten Transportbahn (4) in einer Richtung die wesentlich paralell ist zu dieser für die Fortführung eines neuen Setzkastens, erweitert werden kann.

4. Vorrichtung gemäss Anspruch 2, wobei der leere Setzkasten (36) weiter auf der Unterstützung (37) in einer Richtung, senkrecht zu dieser der Fortführung eines neuen Setzkastens, erweitert werden kann.

5. Eine Vorrichtung gemäss Anspruch 1, wobei die genannten Anschlagmittel (59) Anschläge sind die quer zum Einlassende der genannten Führungsschienen (35) montiert sind.

6. Vorrichtung gemäss Anspruch 1, wobei die Strecke, zur Fortführung eines neuen Setzkastens entlang eine Zuführungstransportbahn (28) verläuft, die ein wenig nach unten neigt von einer höheren Zuführseite zu einer niedrigeren Auslassseite.

7. Vorrichtung gemäss Anspruch 1, wobei die Strecke zur Fortführung eines neuen Setzkastens sich auf eine mittlere Ebene, die gleich oder höher ist als die Ebene der ersten horizontalen Transportbahn (4), befindet.

8. Vorrichtung gemäss Anspruch 1, wobei die Unterstützung zur Erweiterung eines leeren Setzkastens, Ablieferungstransportmittel (37), mit einer Neigung von einer höheren Zuführende zu einer niedrigeren Abführende, aufweist.

9. Vorrichtung gemäss Anspruch 1, die Umlaufmittel, für das Zurückbringen eines leeren Setzkastens dicht zur Einführungsstelle (38) für einen neuen Setzkasten, aufweist.

10. Eine Vorrichtung gemäss Anspruch 1, wobei eine Reihe von auf- und abbewegbaren Druckstiften (30) für Aufhebung der Setzlinge Reihe pro Reihe aus den Setzkasten vorgesehen ist, und Mittel zur Steurerung ihrer Zusammenwirkung mit der genannten Reihe von Aufsteckmitteln (34), wobei mindestens eine der genannten Druckstiften als Positionierstift wirkt für jede folgende, vom Setzkasten aufzuhebender, Reihe von Setzlingen.

11. Vorrichtung gemäss Anspruch 10, wobei die genannten Druckstiften (30) in einem horizontal bewegbaren Träger (55), der im Rahmwerk (26) der Vorrichtung getragen ist, montiert sind, wobei die horizontale Bewegung von einem im Rahmen (26) befestigten Kolben (58) betätigt wird und in diesem Rahmwerk über einen Abstand oder Schritt "d" durch Abstandsanschläge (57) gesteuert wird, weil das Auf- und Abbewegen der Druckstiften (30) von einem Kolben (53) im genannten Träger (55) betätigt wird.

12. Vorrichtung gemäss Anspruch 10 oder 11, wobei quer angeordnete Anschläge (54) in den Seitenwänden des Rahmwerks (26) montiert sind und steuerbar von einer zurückgezogenen Position bis einer ausgezogenen Position bewegbar sind, wobei sie den Setzkasten (29) in einer festen Position, zur Erweiterung der Setzlingen Reihe pro Reihe, klemmen.

13. Eine Vorrichtung gemäss Anspruch 1, die weiter in der Nähe des Auslassendes der ersten horizontalen Transportbahn (4) ein Auswahlgerät (14), für Erweiterung von ungeeigneten Setzlingen (5) vor oder während deren Fortführung zu einem dritten abwärts orientierten Transportbahn (6) aufweist, für Aufnahme und Fortführung der überbleibenden geeigneten Setzlingen zum Erdboden (7) für den Plantvorgang im Feld und wobei gesonderte Puffermittel (8) zwischen dem Auslass (16) der ersten, und dem Eingang (17) der dritten Transportbahn, für Weiterführung der genannten geeigneten Setzlinge zum genannten Eingang (17) und Antriebmittel für die genannte Puffermittel (8) mit einer Geschwindigkeit, die an der Geschwindigkeit der dritten Transportbahn (6) gekoppelt ist, aufweist.

14. Vorrichtung gemäss Anspruch 13, wobei der genannte erste Transportbahn (4) mit einer zweiten Transportbahn (11) zusammenwirkt, so dass das Blattteil (18) der Setzlinge zwischen genannter ersten und zweiten Transportbahn gegriffen wird.

15. Vorrichtung gemäss Anspruch 13, wobei das genannte Puffermittel (8) eine weitere vierte Transportbahn (12), deren Geschwindigkeit mittels seines Antriebmittels im angemessenen Verhältniss zur Geschwindigkeit der dritten Transportbahn (6), zwecks Realisierung des vorafbestimmten Pflanzabstandes im Erdboden gekoppelt ist, aufweist.

16. Vorrichtung gemäss Anspruch 15, wobei das genannte Puffermittel (8) einen Transportriemen (24) einschliesst, der mit dem vierten Transportbahn (12) zusammenwirkt und wobei zwischen den die Wurzelklumpanteilen (22) der geeigneten Setzlinge festgehalten und fortgeführt werden.

17. Vorrichtung gemäss Anspruch 15 oder 16, wobei, in der Nähe und parallel zu einer Auslassrolle (10) der Transportbahn (4), eine Rolle (9) angeordnet ist.

18. Vorrichtung gemäss Anspruch 15 oder 16, die wieterhin eine Austrittsrolle (13) gegenüber dem Eintrittsende der dritten Transportbahn (6) aufweist und derer Geschwindigkeit an deren die vierte Transportbahn (12) gekoppelt ist.

19. Vorrichtung gemäss Anspruch 18, wobei die genannte Austrittsrolle (13) eine elastisch zusammendrückbare Oberfläche besitzt.

20. Vorrichtung gemäss Anspruch 13, wobei das genannte Auswahlgerät (14) an der genannten ersten Transportbahn (4) gekuppelt ist.

21. Vorrichtung gemäss Anspruch 20, wobei das Auswahlgerät einen geneigten Auswahlriemen (14) aufweist, das in der Nähe des Auslassendes der Transportbahn (4) montiert ist, und von seiner Austrittsrolle (20) angetrieben ist, wobei seine Eintrittsrolle (19) gegenüber der Austrittsrolle (15) des Wurzelklump-tragenden Anteils (23) der genannten ersten Transportbahn (4) liegt, und eine Steigung von seiner Eintrittsrolle (19) zur genannten Austrittsrolle (20) darstellt.

## Revendications

1. Un appareil de transport (1) de semis pour une machine de repiquage (transplantation) à installer sur un véhicule de plantation, comprenant une section de transport de plateaux de semis qui comprend des moyens (35) pour guider et retirer ou enlever un plateau vide (36) de l'appareil, des moyens (28) pour alimenter et avancer un nouveau plateau adjacent (29) portant les semis (2) sur une voie à l'intérieur de l'appareil et des moyens (30) pour positionner ledit nouveau plateau en vue de la reprise desdits semis par rangée (32) dudit nouveau plateau par une rangée de moyens de reprise (34) montée sur un système de transfert (3) de semis pour déposer les semis sur un premier convoyeur horizontal (4) dans l'appareil (1), **caractérisé en ce que** les moyens pour guider et reprendre un plateau vide (36) comprend des rails de guidage (35) pour supporter temporairement les bords opposés dudit plateau vide, ces rails étant montés pivotants aux environs de leur bord extérieur pour permettre au plateau (36) d'être déplacé sur un support (37) et pour mettre en place des moyens d'arrêt (59) pour la face avant du nouveau plateau adjacent (29).

2. Un appareil selon la revendication 1 dans lequel les rails de guidage (35) sont montés pivotants le long de leur bord extérieur (61) pour permettre audit plateau vide (36) de tomber sur un support (37) pour être ensuite enlevé à un niveau inférieur, optionnellement à un niveau en dessous dudit premier convoyeur (4).

3. Appareil selon la revendication 2 dans lequel le plateau vide (36) est retirable ensuite sur le support (37) en dessous du premier convoyeur (4) dans une direction qui est quasiment parallèle à celle d'avancement d'un nouveau plateau.

4. Appareil selon la revendication 2 dans lequel le plateau vide (36) est retirable ensuite sur le support (37) dans une direction perpendiculaire à la direction d'avancement d'un nouveau plateau.

5. Un appareil selon la revendication 1 dans lequel lesdits moyens d'arrêt (59) sont des stops montés transversalement au côté d'entrée des rails de guidage(35}.

6. Appareil selon la revendication 1 dans lequel la voie pour avancer un nouveau plateau se trouve le long d'un convoyeur d'alimentation (28) qui est légèrement incliné vers le bas entre un point de départ plus élevé et un point d'arrivée plus bas.

7. Appareil selon la revendication 1 dans lequel la voie pour avancer un nouveau plateau est à un niveau moyen égal ou plus élevé que le niveau du premier convoyeur horizontal (4).

8. Appareil selon la revendication 1 dans lequel le support pour retirer un plateau vide comprend des moyens de transport et d'enlèvement (37) avec une inclinaison entre un point de départ plus élevé et un point d'arrivée plus bas.

9. Appareil selon la revendication 1 comprenant des moyens de re-circulation pour ramener le plateau vide à proximité de la zone d'alimentation (38) pour un nouveau plateau.

10. Un appareil selon la revendication 1 dans lequel une rangée de tiges de poussage (30), déplaçables en haut et en bas est aménagé pour soulever les semis rangée par rangée des plateaux, et des moyens pour piloter leur coopération avec ladite rangée de moyens de reprise (34) dans lequel au moins une des tiges de poussage agit comme tige de positionnement pour chaque rangée consécutive de semis devant être soulevée du plateau.

11. Appareil selon la revendication 10 dans lequel les tiges de poussage (30) sont montées dans un transporteur déplaçable horizontalement (55) qui est supporté dans le cadre (26) de l'appareil, le mouvement horizontal étant commandé par un vérin (58) fixé dans le cadre (26) et étant contrôlé sur une distance ou pas "d" par des stops de distance (57) dans ledit cadre, alors que le mouvement en haut et en bas des tiges de poussage (30) est commandé par un vérin (53) monté dans ledit transporteur (55).

12. Appareil selon la revendication 10 ou 11 dans lequel des stops de blocage transversaux (54) sont montés dans les parois de côté du cadre (26) et sont mobiles de manière contrôlable d'une position rétractée à une position étendue dans laquelle ils serrent le plateau (29) dans une position fixe pour retirer les semis rangée par rangée.

13. Un appareil selon la revendication 1 comprenant en plus près de la sortie dudit premier convoyeur horizontal (4) un appareil sélecteur (14) pour éliminer les semis non conformes (5) avant ou pendant leur avancement vers un troisième convoyeur dirigé vers le bas (6) pour recevoir et faire avancer vers le sol (7) les semis restants conformes pour l'opération de plantation dans le champ et dans lequel des moyens de stockage séparés (8) sont prévus entre la sortie (16) dudit premier et l'entrée (17) dudit troisième convoyeur pour le transport des semis conformes vers ladite entrée (17) et des moyens d'entrâinement desdits moyens de stockage (8) à une vitesse qui est liée à la vitesse du troisième convoyeur (6).

14. Appareil selon la revendication 13 dans lequel ledit premier convoyeur (4) coopère avec un deuxième convoyeur (11) de telle manière que la portion feuillue des semis (18) est agrippée entre ledit premier et deuxième convoyeur.

15. Appareil selon la revendication 13 dans lequel ledit moyen de stockage (8) comprend encore un quatrième convoyeur (12), dont la vitesse est liée par ses moyens d'entraînement dans la bonne proportion à la vitesse du troisième convoyeur (6) dans le but de produire une distance de plantation prédéterminée dans la terre.

16. Appareil selon la revendication 15 dans lequel ledit moyen de stockage (8) comprend une courroie de transport (24) coopérant avec le quatrième convoyeur (12) et entre lesquels la portion racinaire du semis conforme (22) est tenue et avancée.

17. Appareil selon la revendication 15 ou 16 dans lequel un rouleau (9) est placé proche du rouleau de sortie (10) du convoyeur (4) et tourne parallèlement à celui-ci.

18. Appareil selon la revendication 15 ou 16 comprenant en plus un rouleau de sortie (13) faisant face au côté d'entrée du troisième convoyeur (6) et dont la vitesse est liée à celle du quatrième convoyeur (12).

19. Appareil selon la revendication 18 dans lequel le rouleau de sortie (13) a une surface élastique compressible.

20. Appareil selon la revendication 13 dans lequel l'appareil sélecteur (14) est couplé au premier convoyeur (4).

21. Appareil selon la revendication 20 dans lequel l'appareil sélecteur comprend une courroie inclinée de sélection (14) montée proche du côté de la sortie du convoyeur (4) et entrâiné par son rouleau de sortie (20), faisant face avec son rouleau d'entrée (19) au rouleau de sortie (15) de la portion du premier convoyeur (4) qui transporte la portion racinaire (23) et ayant une inclinaison dirigée vers le haut depuis son rouleau d'entrée (19) vers son rouleau de sortie (20).
